# EUROPÄISCHE PATENTSCHRIFT

(11) **EP 2 789 646 B1**
(45) Veröffentlichungstag und Bekanntmachung des Hinweises auf die Patenterteilung: **30.05.2018**
(21) Anmeldenummer: 14163042.6
(22) Anmeldetag: 01.04.2014
(51) Int. Cl.: C08J 5/18, B29D 7/01, B29C 47/00, B29C 47/76, C08J 3/20

(54) **Verfahren zur Herstellung einer elastischen Folie für Einweg-Hygieneprodukte**
Process for producing an elastic foil for disposable hygiene articles
Procédé de fabrication d'une feuille élastique pour articles hygiéniques

(30) Priorität: 11.04.2013 DE 102013103669; 02.08.2013 DE 102013108369
(43) Veröffentlichungstag der Anmeldung: 15.10.2014
(73) Patentinhaber: Mondi Gronau GmbH, 48599 Gronau (DE)
(72) Erfinder: Clasen, Hannes, 48143 Münster (DE); Hagemann, Andreas, 48599 Gronau-Epe (DE)
(74) Vertreter: Lorenz, Bernd Ingo Thaddeus

(56) Entgegenhaltungen:
- EP-A1- 0 068 561
- EP-A1- 0 490 359
- EP-A1- 2 335 663
- EP-A2- 1 892 094
- DE-A1- 4 021 751
- DE-A1- 19 806 452
- DE-A1-102007 029 010

## Beschreibung

Die vorliegende Erfindung betrifft ein Verfahren zur Herstellung einer elastischen Folie für Einweg-Hygiene-Produkte mit einem Extruder. Zur Herstellung der elastischen Extrusionsfolie werden üblicherweise verschiedene Polymerkomponenten und Zusatzstoffe in den Extruder gegeben, wobei dann ein Vermischen, Aufschmelzen und Plastfizieren erfolgt, bevor der plastifizierte, schmelzflüssige Kunststoff einlagig zu einer Monofolie oder in Kombination mit weiteren Folienschichten zu einer Coextrusionsfolie extrudiert bzw. coextrudiert wird.

Bei der Herstellung von elastischen Folien für Einweg-Hygiene-Produkte enthält der dem Extruder zugeführte thermoplastische Kunststoff häufig Styrol-BlockCopolymere, welche sich bei vergleichsweise geringen Kosten durch eine gute Elastizität auszeichnen. Entsprechende elastische Folien haben sich in der Praxis bewährt und werden in einem großen Maße eingesetzt.

Die zur Herstellung der elastischen Folie eingesetzten Kunststoffe mit elastischen Eigenschaften sind bei der Anordnung an einem Einweg-HygieneProdukt gesundheitlich unbedenklich. Jedoch weisen thermoplastische Elastomere häufig einen charakteristischen Geruch auf, der zum Teil als störend empfunden wird.

Um die Entwicklung wahrnehmbarer Gerüche von Einweg-Hygiene-Produkten zu vermeiden, ist aus der EP 2 335 663 B1 ein Verfahren zur Herstellung einer elastischen Folie für Einweg-Hygiene-Produkten bekannt, bei dem einer Polymerzusammensetzung bei einer Vormischung und/oder bei der Extrusion Zeolithe zugeführt werden, wobei die Porenöffnungen der Zeolithe insbesondere größer als 2,5 Angström und kleiner als 5,5 Angström sind. Die Zeolithe sind dazu in der Lage, durch Adsorption Styrol-Monomere und andere niedermolekulare Bestandteile aufzunehmen.

Das Hinzufügen einer ausreichenden Menge an Zeolithen führt jedoch zu einer erheblichen Erhöhung der Herstellungskosten. Auch der Einsatz von möglichst reinen Rohstoffen mit einem besonders geringen Anteil an Monomeren und Oligomeren führt gegenüber dem Einsatz eines Standardmaterials zu einer Kostenerhöhung. Die DE 198 06 452 A1 und EP 1 892 094 A2 betreffen die herkömmliche Extrusion elastischer Folien.

Vor diesem Hintergrund liegt der vorliegenden Erfindung die Aufgabe zugrunde, ein Verfahren zur Herstellung einer elastischen Folie für Einweg-Hygiene-Produkte anzugeben, mit dem bei einem möglichst geringen Kostenaufwand eine Minimierung von Gerüchen möglich ist.

Gegenstand der Erfindung und Lösung der Aufgabe ist ein Verfahren zur Herstellung einer elastischen Folie für Einweg-Hygiene-Produkte gemäß Patentanspruch 1.

Erfindungsgemäß ist ein Entgasen des thermoplastischen Kunststoffes in dem Extruder unterstützt durch die Zugabe eines Schleppmittels vorgesehen, wobei dann nachfolgend in einer Entgasungszone des Extruders durch eine Druckabsenkung der Kunststoff mit dem darin eingemischten Schleppmittel aufschäumt.

Das Schleppmittel wird flüssig zugegeben, wobei durch einen ausreichenden Druck ein Verdampfen des Schleppmittels zunächst verhindert wird. Erst bei dem Verfahrensschritt des Entgasens verdampft das Schleppmittel schlagartig, wodurch ein Schaum mit einer sehr großen Oberfläche entsteht. Bei der Entgasung wird entsprechend das Schleppmittel zumindest weitestgehend wieder aus dem schmelzflüssigen Kunststoff entfernt, wobei dann durch die sehr große Oberfläche innerhalb des Schaums auch niedermolekulare Bestandteile wie Monomere und Oligomere effektiver ausgetrieben werden.

Das Entgasen ist seit langer Zeit insbesondere bei Lebensmittelverpackungen bekannt, um gesundheitliche Beeinträchtigungen zu vermeiden, wenn durch einen direkten Kontakt Monomeren und Oligomere aus der Verpackung in das verpackte Lebensmittel gelangen können.

Das Entgasen einer elastischen Folie für Einweg-Hygiene-Produkte wurde jedoch bisher nicht in Betracht gezogen. Der Erfindung liegt dabei insbesondere die Erkenntnis zugrunde, dass auch der zum Teil als störend wahrgenommene spezifische Geruch eines Einweg-Hygiene-Produktes häufig im Wesentlichen auf die elastischen Bestandteile zurückzuführen ist, wobei gerade diese elastischen Bestandteile, also insbesondere die beschriebene elastische Folie, durch ein Entgasen eine reduzierte Geruchsentwicklung aufweisen.

Entgegen dem bekannten Entgasen von nicht elastischen Verpackungsmaterialien wie Acrylnitril-Butadien-Styrol-Copolymer (ABS) sind die niedermolekularen Bestandteile in der elastischen Folie eines Einweg-Hygiene-Produktes gesundheitlich unbedenklich, insbesondere weil sie nicht über Nahrung von einem Benutzer aufgenommen werden können.

Üblicherweise wird dem Extruder ein Compound, also eine Mischung verschiedener Materialien als thermoplastischer Kunststoff zugegeben. Erfindungsgemäß weist der thermoplastische Kunststoff zumindest ein Polymer aus der Gruppe Styrol-Block-Copolymer in Form von Styrol-Butadien-Styrol-Copolymer (SBS), Styrol-Isopren-Styrol-Copolymer (SIS), Styrol-Ethen-Ethen-Propen-Copolymer (SEEPS) und Styrol-Ethenbuten-Styrol-Copolymer (SEBS) auf. Die genannten Materialien weisen elastische Eigenschaften auf und eignen sich deshalb für den Einsatz an Einweg-Hygiene-Produkten.

Die elastische Folie kann beispielsweise Bestandteil eines Verschlussbandes einer Windel sein, wobei sich hier relativ hohe Anforderungen an die Stabilität sowie die elastischen Eigenschaften ergeben. Die elastische Folie ist bis zu einem Reißen üblicherweise um zumindest 100 %, vorzugsweise um 200 %, besonders bevorzugt um 400 % dehnbar.

Nach der Dehnung der Folie um 50 % erfolgt nach Wegfall der Zugkraft eine Zurückstellung der Folie, wobei die bleibende Dehnung, also die nach dem Wegfall der Zugspannung verbleibende Längenänderung, gegenüber der Ausgangslänge üblicherweise kleiner als 25 %, vorzugsweise kleiner als 10 %.

Elastische Folien weisen in der Regel unterschiedliche Eigenschaften in einer Produktionsrichtung (MD) und einer Querrichtung (CD) auf. Im Rahmen der Erfindung ist es auch möglich, dass die Folie lediglich in einer Richtung die beschriebene Dehnbarkeit aufweist. Gerade bei dem Einsatz als Verschlussstreifen an einer Windel ist bei der Benutzung lediglich die Dehnbarkeit in einer vorgegebenen Richtung ausschlaggebend. Auch wenn in der Regel ein Compound unterschiedlicher Materialien vorliegt, beträgt der Anteil von Styrol-Block-Copolymer in dem thermoplastischen Kunststoff vorzugsweise zumindest 50 Gew.-%. Als weiterer Bestandteil eines Compounds kann auch Polystyrol (PS) als Quelle für Styrol-Monomere vorhanden sein.

Bei dem Einsatz von Styrol-Block-Copolymer, insbesondere Styrol-Butadien-Styrol-Copolymer können nicht vernachlässigbare Anteile von Monomeren und Oligomeren in dem Kunststoff enthalten sein. Monomere und Oligomere können bereits in dem Ausgangsmaterial vorhanden sein, mit dem der Extruder beschickt wird. Zusätzlich kann ein Teil des Styrol-Block-Copolymers in dem Extruder unter dem Einfluss von Hitze, Druck und Scherkräften zu niedermolekularen Bestandteilen aufgespalten werden. Dieses Problem besteht auch, wenn ein Rohmaterial mit einer hohen Reinheit eingesetzt wird, so dass auch bei einem reinen Ausgangsmaterial die Bildung niedermolekularer Bestandteile, insbesondere von Styrol-Monomeren, und ein dadurch bedingter spezifischer Geruch nicht vermieden werden können. Schließlich kann auch versucht werden, die Belastungen für den Kunststoff während des Extrusionsprozesses durch eine möglichst genaue Einstellung geeigneter Parameter zu reduzieren, was aber genau wie die Auswahl eines möglichst reinen Materials zu einer Erhöhung der Kosten führt.

Durch die erfindungsgemäß vorgesehene Entgasung mit einem Schleppmittel können zusätzlich auch Lösemittel entfernt werden, die aufgrund des Herstellungsprozesses noch in dem Kunststoff enthalten sind. Ein nicht vernachlässigbarer Anteil an Lösungsmittel kann insbesondere dann vorliegen, wenn der Kunststoff durch eine Lösungspolymerisation gewonnen ist. Beispielsweise wird für die Herstellung von Styrol-Butadien-Styrol-Copolymer häufig Cyclohexan eingesetzt, welches auch nach einem Ausgasen einen "chemischen Geruch" verursachen kann.

Im Rahmen der Erfindung kann sowohl eine Monofolie als auch eine Coextrusionsfolie erzeugt werden. Bei der Erzeugung einer Coextrusionsfolie können entweder mehrere elastische Schichten oder zumindest eine elastische Schicht mit zumindest einer unelastischen Schicht kombiniert werden, die dann ggf. bei einem ersten Dehnen einen erhöhten Kraftaufwand erfordert. Zumindest dünne Deckschichten aus einem nichtelastischen Material können beispielsweise dazu vorgesehen sein, um ein Aufwickeln der Folie ohne ein Verblocken zu ermöglichen oder auch ein Verkleben mit zusätzlichen Deckschichten, beispielsweise einem Nonwoven-Material, zu erleichtern.

Die Dicke einer Monofolie kann beispielsweise zwischen 30 µm und 130 µm betragen. Wenn die elastische Folie als Coextrusionsfolie mit nicht elastischen Schichten hergestellt wird, ist häufig nur eine Entgasung der elastischen Schicht bzw. der elastischen Schichten notwendig. Wenn allerdings auch die zumindest eine nicht elastische Schicht als nicht vernachlässigbare Quelle von niedermolekularen Bestandteilen in Betracht kommt, kann auch für diese Schicht die beschriebene Entgasung zusätzlich erfolgen.

Der Erfindung liegt in diesem Zusammenhang die Erkenntnis zugrunde, dass gerade der elastische Kunststoff der elastischen Folie für eine Geruchsbeeinträchtigung verantwortlich ist. So ist es überraschend, dass beispielsweise bei Babywindeln, die insgesamt auftretende Geruchsentwicklung erheblich verringert werden kann, wenn lediglich die hier beschriebenen Maßnahmen zur Entgasung der elastischen Folie vorgenommen werden, wobei die elastische Folie nur an Verschlusselementen in Formen von Verschlussbändern oder Windelohren vorgesehen ist. Bezogen auf den insgesamten Materialeinsatz für die Herstellung eines solchen Einweg-Hygieneartikels erscheint die elastische Folie zunächst vernachlässigbar. Überraschenderweise kann aber die elastische Folie eine Hauptquelle für das Entstehen eines wahrnehmbaren Geruches sein.

Das Entgasen einer Kunststoffschmelze in einem Extruder ist aus dem Gebiet von Lebensmittel- oder Medizinverpackungen bekannt, um Gesundheitsbeeinträchtigungen durch Reste von niedermolekularen Bestandteilen zu vermeiden (DE 40 21 751C2, WO 2008/025446 A1, EP 0 490 359 A1, EP 0 068 561 A1).

Im Rahmen der vorliegenden Erfindung kann die Verfahrensführung in einer an sich bekannten Weise erfolgen. Dabei wird das Schleppmittel als Flüssigkeit eingespritzt, die nicht kompressibel ist. Geeignet sind insbesondere auch Inertgase, die bei Raumtemperatur und Umgebungsdruck gasförmig sind und durch das Einspritzen bei einem sehr hohen Druck einen überkritischen Zustand aufweisen. Besonders bevorzugt wird Kohlendioxid (CO₂) als Fluid in einem überkritischen Zustand eingespritzt, wobei insbesondere aber auch Stickstoff, Edelgase, Methanol oder Wasser als Schleppmittel in Betracht kommen.

Das Schleppmittel wird dann in dem Extruder in einer Mischzone homogen in der Schmelze des Kunststoffes verteilt. Da die Schmelze des Kunststoffes unter Druck steht, kann das Schleppmittel zunächst nicht in den gasförmigen Aggregatzustand übergehen.

In der Entgasungszone wird die Schmelze entspannt, wobei das homogen in der Kunststoffschmelze verteilte Schleppmittel schlagartig in den gasförmigen Zustand übergeht und dadurch ein Aufschäumen erfolgt. Durch das Aufschäumen wird eine sehr große Oberfläche bereitgestellt, welche einen effektive Entgasung, das heißt eine Abtrennung niedermolekularer Bestandteile, ermöglicht.

Das erfindungsgemäße Verfahren kann als Alternative zu dem aus dem Stand der Technik bekannten Verfahren gemäß der EP 2 335 663 B2 vorgesehen sein, wobei aber auch eine Kombination einer Entgasung mit Schleppmittel und einer Zugabe von Geruchsabsorbern erfolgen kann.

So ist gemäß einer bevorzugten Ausgestaltung der Erfindung vorgesehen, dass dem elastische Eigenschaften aufweisenden Kunststoff oder einem Polymermaterial für die Bildung einer zusätzlichen Schicht der elastischen Folie ein Geruchsabsorber zugegeben wird. Die für den von Benutzern häufig als chemisch wahrgenommenen Geruch verantwortlichen niedermolekularen Bestandteile werden damit auf besonders effektive Weise gebunden oder entfernt.

Bei der Auswahl eines geeigneten Geruchsabsorbers ist zu berücksichtigen, dass auch bei einem elastische Eigenschaften aufweisenden Kunststoff mit einem Styrol-Block-Polymer oder mit Polystyrol als Beimischung nicht nur Styrol-Monomere als Verursacher eines wahrnehmbaren Geruches in Betracht kommen. Darüber hinaus können bei einem oxidativen Abbau von Polystyrol bei etwa 200 °C auch Ethylenbenzene, Cumene, Benzaldehyde, Styrenoxide, Acetophenon, 1-Phenylethynol, Butyl-Alkohol, Ameisensäure, N-Heptane, Crotonaldehyde, 4,4 Demethylheptan und Butylhydroxytoluol (BHT) entstehen.

Als Geruchsabsorber kommen Zeolithe, Cyclodextrine, Polyethylenemin und Schichtsilikate in Betracht, wobei grundsätzlich auch Mischungen verschiedener Stoffe als Geruchsabsorber vorgesehen sein können. Geeignete Cyclodextrine werden von dem Unternehmen Wacker Chemie unter dem Markennamen Cawasol und Cawamax vertrieben.

Wie in der EP 2 335 663 B2 beschrieben, sind Zeolithe als Geruchsabsorber deshalb geeignet, weil jeder niedermolekulare Bestandteile zu einem großen Maße in Poren aufgenommen und gebunden werden können.

Die Zugabe von Geruchsabsorbern kann im Rahmen einer vorgelagerten Compoundierung oder bei dem Extrusionsprozess vor oder nach dem Entgasen mittels Schleppmittel erfolgen. Wenn eine Zugabe des Geruchsabsorbers erst nach dem Entgasen erfolgt, ergibt sich der Vorteil, dass sich zuvor noch keine niedermolekularen Bestandteile anlagern können, so dass der Geruchsabsorber also vollständig unverbraucht ist, so dass bereits relativ kleine Mengen an nach dem Entgasen frisch zugegebenen Geruchsabsorbern ausreichend sein können, um Reste von niedermolekularen Bestandteilen aufzunehmen, welche bei dem Entgasen nicht entfernt wurden.

Bei der Zugabe von Geruchsabsorbern vor dem Entgasen ergibt sich dagegen der Vorteil, dass durch das Entgasen und der damit üblicherweise verbundenen Aufschäumung der Geruchsabsorber sehr gleichmäßig verteilt wird. Insbesondere kann vorgesehen sein, dass das Schleppmittel zusammen mit dem Geruchsabsorber in den Extruder eingespritzt wird. Dabei können Zeolithe als Geruchsabsorber auch dazu genutzt werden, um eine möglichst große Menge an Schleppmittel in die Kunststoffschmelze bzw. den unter Druck stehenden Kunststoff einzubringen, wobei sich beispielsweise Wasser als Schleppmittel zunächst in den Poren der Zeolithe sammeln kann und dann bei der Entgasung in großen Mengen freigesetzt wird. Mit einer zunehmenden Menge an Schleppmitteln wird dabei auch eine effektivere Entfernung von niedermolekularen Bestandteilen erreicht, wobei diese niedermolekularen Bestandteile durch das Entgasen gleichsam aus dem Kunststoff herausgespült werden.

Wie zuvor beschrieben, kann im Rahmen der Erfindung entweder eine Monofolie oder auch eine mehrschichtige Folie gebildet werden. Bei einer mehrschichtigen Folie wird üblicherweise eine elastische Kernschicht mit zumindest einer Deckschicht kombiniert, welche nicht elastisch oder weniger elastisch ist.

Genau wie das zuvor beschriebene Entgasen in sämtlichen Schichten oder lediglich einem Teil der Schichten einer mehrschichtigen Folie erfolgen kann, kann auch der Geruchsabsorber in sämtlichen Richtungen oder nur einen Teil der Schichten vorhanden sein.

Für jede Schicht kann also die Zugabe eines Geruchsabsorbers alternativ oder zusätzlich zu einem Entgasen des entsprechenden Kunststoffes erfolgen. Während das Entgasen selbstverständlich nur auf die jeweilige Schicht wirkt, können durch Geruchsabsorber auch niedermolekulare Bestandteile gebunden werden, welche nach der Fertigung der elastischen Folie von einer anderen Schicht durch die elastische Folie hindurch diffundieren. Geruchsabsorber können vor diesem Hintergrund auch in einer Deckschicht oder beidseitig angeordneten Deckschichten vorgesehen sein, welche beispielsweise aus Polyolefin gebildet sind und deshalb an sich nur einen geringen Anteil an niedermolekularen Bestandteilen aufweisen. Mit einem Geruchsabsorber ausgerüstete Außenschichten stellen dann eine Art Barriere für niedermolekulare Bestandteile dar, welche von einer innenliegenden Kernschicht aus diffundieren.

Wenn wie zuvor beschrieben der Geruchsabsorber vor oder zusammen mit dem Schleppmittel zugegeben wird, können sich auch weitere kombinatorische Vorteile ergeben. Wird beispielsweise ein Schleppmittel mit einer hohen Verdampfungsenthalpie, wie beispielsweise Wasser, eingesetzt, wird die Kunststoffschmelze durch das Verdampfen des Schleppmittels bei dem Entgasen abgekühlt. Durch das Abkühlen kann eine thermische Schädigung des Geruchsabsorbers vermindert werden, auch wenn dieser hitzeempfindlich ist. Durch die Abkühlung kann des Weiteren auch die Zersetzung des Kunststoffes in niedermolekulare Bestandteile reduziert werden.

Gemäß einem weiteren Aspekt der vorliegenden Erfindung kann die elastische Folie auch nach der Extrusion an zumindest einer Außenfläche mit einem Geruchsabsorber in Kontakt gebracht werden. Diese Maßnahmen können zusätzlich oder alternativ zu der Einbringung eines Geruchsabsorbers in die elastische Folie vorgesehen sein. So kann die elastische Folie beispielsweise mit einem Puder versehen werden, welches den Geruchsabsorber enthält bzw. welches aus dem Geruchsabsorber gebildet ist. Darüber hinaus kann die elastische Folie auch durch ein Bad geführt werden, in welchem der Geruchsabsorber enthalten ist, wozu der Geruchsabsorber sowohl in dem Bad gelöst oder dispergiert sein kann. Bereits innerhalb des Bades kann ein gewisser Anteil an niedermolekularen Bestandteilen oberflächlich entfernt werden, wobei durch die Benutzung auch Geruchsabsorber an der Oberfläche der elastischen Folie verbleiben können.

Im Rahmen der Erfindung ergeben sich unterschiedliche Möglichkeiten für die konkrete Verfahrensführung bei dem Extrudieren der elastischen Folien. Wie zuvor erläutert, wird in dem Extruder üblicherweise ein Compound gebildet, wobei der Extruder mit thermoplastischem Kunststoff in Form unterschiedlicher Rohstoffe beschickt wird. Im Rahmen einer solchen Compoundierung können optional auch Füllstoffe, Farbpigmente, Verarbeitungshilfsmittel oder andere Zusatzstoffe beigegeben werden. Nach dem erfindungsgemäßen Verfahren kann dann nach dem Entgasen und erneuten Komprimieren des Kunststoffes entweder direkt die elastische Folie oder zunächst das in dem Extruder gebildete Compound extrudiert werden, wobei für die Extrusion des Compounds als Zwischenprodukt in der Regel eine Granulierung vorgesehen ist. Das so in dem Extruder gebildete Compound wird dann nachfolgend einem weiteren Extruder zugeführt, mit dem die elastische Folie extrudiert wird. Wenn gemäß der beschriebenen zweiten Verfahrensvariante zunächst ein Compound als Zwischenprodukt gebildet wird, dient der erste Extruder, an dem die Entgasung erfolgt, als Compounder, während die Folienextrusion dann unter erneutem Aufschmelzen des gebildeten Compounds in dem weiteren Extruder erfolgt. Als Vorteil ergibt sich, dass nur der als Compounder vorgesehene Extruder mit einer Einrichtung zum Entgasen ausgerüstet werden muss. Insbesondere kann als Compounder ein Extruder eingesetzt werden, der einen großen Durchsatz aufweist, wobei dann mit dem so gebildeten Compound mehrere einfache Extruder beschickt werden, an denen beispielsweise durch eine Breitschlitzdüse eine Folienbahn oder durch Schlauchextrusion ein Folienschlauch gebildet wird. Als Extruder zum Compoundieren kann ein Doppelschneckenextruder, bevorzugt mit gleichläufigen Schnecken, zum Einsatz kommen. Mit einem solchen Doppelschneckenextruder kann eine sehr gleichmäßige homogene Mischung der zur Bildung des Compounds zugegebenen Rohstoffe erreicht werden, wobei ein Doppelschneckenextruder mit gleichlaufenden Wellen in der Praxis auch einen gewissen selbstreinigenden Effekt aufweist.

Sofern zunächst ein Compound als Zwischenprodukt gebildet wird, kann dann für die Extrusion der elastischen Folie vorzugsweise auch ein einfacher Einwellen-Extruder eingesetzt werden, weil der Mischvorgang verschiedener Rohstoff bereits abgeschlossen ist.

Wenn gemäß der zweiten Verfahrensvariante zunächst das Compound als Zwischenprodukt hergestellt wird, ergibt sich der Nachteil, dass bei der abschließenden Extrusion der elastischen Folie in einem weiteren Extruder durch die dort auftretenden Belastungen wieder zu einem gewissen Grad niedermolekulare Bestandteile in Form von Monomeren und Polygomeren gebildet werden können. Diese Gefahr besteht nicht, wenn gemäß der ersten Verfahrensvariante die Extrusion der elastischen Folie direkt nach dem Entgasen in einem für beide Zwecke vorgesehenen Extruder erfolgt.

Die Auswahl der ersten und der zweiten Verfahrensvariante kann in der Praxis insbesondere anhand der vorhandenen technischen Einrichtungen, dem gewünschten Materialdurchsatz und unter Berücksichtigung der Anforderungen an die Reinheit des Endproduktes in Bezug auf niedermolekulare Bestandteile erfolgen.

Wenn zunächst mit einem ersten Extruder das Compound und mit einem zweiten Extruder die elastische Folie gebildet wird, kann die beschriebene Entgasung mit einem Schleppmittel grundsätzlich auch in beiden Extrudern oder auch nur in dem zweiten Extruder zur Herstellung der elastischen Folie erfolgen, wobei weiterhin von der erfindungsgemäßen Lehre Gebrauch gemacht wird.

Gegenstand der Erfindung ist auch ein Verfahren zur Herstellung eines geschlossenen Gebindes mit einer Vielzahl von Einweg-Hygieneprodukten, die jeweils zumindest ein elastisches Element mit einer elastischen Folie aufweisen, wobei zur Bildung der elastischen Folie ein Extruder mit einem elastische Eigenschaften aufweisenden thermoplastischen Kunststoff beschickt und der Kunststoff nachfolgend unter Aufbau eines Schmelzdruckes in dem Extruder geförderten und plastifiziert wird, wobei ein Schleppmittel in den Extruder eingespritzt und mit dem plastifizierten, unter Druck bestehenden Kunststoff gemischt wird, wobei der mit dem Schleppmittel vermischte Kunststoff durch eine Druckabsenkung in einer Endgasungskammer des Extruders unter aufschäumen entgast wird, wobei der Kunststoff zur Erzeugung eines Extrusionsdruckes erneut komprimiert und die elastische Folie an einer Extrusionsdüse des Extruders extrudiert wird und wobei aus mehreren Komponenten einschließlich des elastischen Elementes Einweg-Hygieneprodukte gebildet und gemeinsam verpackt werden.

Einweg-Hygieneprodukte wie Windel werden üblicherweise in geschlossenen Gebinden, beispielsweise in einer Folie oder einem Foliebeutel verpackt. Eine solche Verpackung ist oft luftdicht oder verhindert zumindest den Luftaustausch in einem gewissen Maße.

Bei einer Lagerung der Einweg-Hygieneprodukte in der Verpackung können dann niedermolekulare Bestandteile aus der elastischen Folie ausgasen und sich innerhalb der Verpackung ansammeln, wenn kein Luftaustausch besteht. Gerade bei einem Gebinde mit einer Vielzahl von Einweg-Hygieneprodukte besteht deshalb die Gefahr, dass bei einem erstmaligen öffnen der Verpackung ein deutlich wahrnehmbarer Geruch auftritt. Auch wenn die niedermolekularen Bestandteile in den üblichen Konzentrationen gesundheitlich völlig unbedenklich sind, kann ein solcher Geruch bei einem Benutzer vorbehalte auslösen. Dies trifft insbesondere für Einweg-Hygieneprodukte zu, welche für Babys und Kleinkinder vorgesehen sind.

Überraschenderweise hängt die Reaktion der Verbraucher wesentlich von den jeweiligen Erfahrungen ab. Wenn der Verbraucher beispielsweise die Verwendung von Einweg-Hygieneartikeln oder anderer Kunststoffprodukte aus der Praxis gewohnt ist, wird er auch bei dem Aufreißen eines geschlossenen Gebindes mit einer Vielzahl von Einweg-Hygieneprodukte selbst bei der bisherigen Ausgestaltung der elastischen Folie nur in seltenen Fällen einen Geruch feststellen und diesen als störend empfinden.

Wenn der Verbraucher allerdings den Umgang mit derartigen Produkten und entsprechend auch nicht die typischen Gerüche gewohnt ist, besteht ein größeres Risiko für an sich unbegründete Vorbehalte gegen das Einweg-Hygieneprodukt. Um also auch diesen erhöhten Qualitätsanforderungen zu genügen, ist eine möglichst vollständige Entfernung von niedermolekularen, flüchtigen Bestandteilen aus dem Einweg-Hygieneprodukt anstreben.

## Patentansprüche

1. Verfahren zur Herstellung einer elastischen Folie für Einweg-Hygieneprodukte mit einem Extruder umfassend die Verfahrensschritte:
Beschicken des Extruders mit einem elastische Eigenschaften aufweisenden thermoplastischen Kunststoff, wobei der thermoplastische Kunststoff als Styrol-Block-Copolymer zumindest einen der Stoffe Styrol-Butadien-Styrol-Copolymer (SBS), Styrol-Isopren-Styrol-Copolymer (SIS), Styrol-Ethen-Ethen-Propen-Copolymer (SEEPS) und Styrol-EthenButen-Styrol-Copolymer (SEBS) enthält.
Fördern und Plastifizieren des Kunststoffes in dem Extruder unter Aufbau eines Schmelzdruckes;
Einspritzen eines Schleppmittels als Flüssigkeit in den Extruder, wobei als Schleppmittel Kohlendioxid, Stickstoff, Edelgase in einem überkritischen Zustand, Methanol oder Wasser eingespritzt wird.
Vermischen des Schleppmittels mit dem plastifizierten, unter Druck stehenden Kunststoff;
Entgasen des mit dem Schleppmittel vermischten Kunststoffes durch eine Druckabsenkung in einer Entgasungszone des Extruders;
erneutes Komprimieren des Kunststoffes zur Erzeugung eines Extrusionsdruckes;
Extrudieren der elastischen Folie an einer Extrusionsdüse des Extruders.

2. Verfahren nach Anspruch 1, wobei der thermoplastische Kunststoff zumindest 50 Gew.-% Styrol-Block-Copolymer enthält.

3. Verfahren nach Anspruch 1 oder 2, wobei die elastische Folie als Monofolie mit einer Dicke zwischen 30 µm und 130 µm extrudiert wird.

4. Verfahren nach einem der Ansprüche 1 bis 3, wobei dem elastische Eigenschaften aufweisenden Kunststoff oder einem Polymermaterial für die Bildung einer zusätzlichen Schicht der elastischen Folie ein Geruchsabsorber zugegeben wird.

5. Verfahren nach Anspruch 4, wobei als Geruchsabsorber zumindest ein Stoff ausgewählt aus der Gruppe Zeolithe, Cyclodextrine, Polyethylenimin und Schichtsilikate vorgesehen ist.

6. Verfahren nach Anspruch 5, wobei als Geruchsabsorber Zeolithe zusammen mit Wasser zugegeben werden.

7. Verfahren nach Anspruch 5 oder 6, wobei dem Kunststoff in dem Extruder nach dem Entgasen Zeolithe zugegeben werden.

8. Verfahren nach einem der Ansprüche 1 bis 7, wobei die elastische Folie nach der Extrusion an zumindest einer Außenfläche mit einem Geruchsabsorber in Kontakt gebracht wird.

9. Verfahren nach Anspruch 8, wobei die elastische Folie mit einem den Geruchsabsorber enthaltenden Puder versehen wird.

10. Verfahren nach Anspruch 8, wobei die elastische Folie durch ein Bad geführt wird, in welchem der Geruchsabsorber enthalten ist.

11. Verfahren nach einem der Ansprüche 1 bis 10, wobei der Extruder mit thermoplastischen Kunststoff in Form von unterschiedlichen Rohstoffen beschickt wird, die miteinander vermischt werden, wobei nach dem Entgasen und erneuten Komprimieren das durch Mischen der Rohstoffe gebildet Compound extrudiert und dabei granuliert wird und wobei das so gebildete Compound einem weiteren Extruder zugeführt wird, mit dem die elastische Folie extrudiert wird.

12. Verfahren zur Herstellung eines geschlossenen Gebindes mit einer Vielzahl von Einweg-Hygiene-Produkten, die jeweils zumindest ein elastisches Element mit einer elastischen Folie aufweisen,
wobei zur Bildung der elastischen Folie ein Extruder mit einem elastische Eigenschaften aufweisenden thermoplastischen Kunststoff beschickt und der Kunststoff nachfolgend unter Aufbau eines Schmelzdruckes in dem Extruder gefördert und plastifiziert wird,
wobei der thermoplastische Kunststoff als Styrol-Block-Copolymer zumindest einen der Stoffe Styrol-Butadien-Styrol-Copolymer (SBS), Styrol-Isopren-Styrol-Copolymer (SIS), Styrol-Ethen-Ethen-Propen-Copolymer (SEEPS) und Styrol-Ethen-Buten-Styrol-Copolymer (SEBS) enthält,
wobei ein Schleppmittel als Flüssigkeit in den Extruder eingespritzt und mit dem plastifizierten, unter Druck stehenden Kunststoff gemischt wird,
wobei als Schleppmittel Kohlendioxid, Stickstoff, Edelgase in einem überkritischen Zustand, Methanol oder Wasser eingespritzt wird.
wobei der mit dem Schleppmittel vermischte Kunststoff durch eine Druckabsenkung in einer Entgasungszone des Extruders entgast wird,
wobei der Kunststoff zur Erzeugung eines Extrusionsdrucks komprimiert und die elastische Folie an eine Extrusionsdüse des Extruders extrudiert wird,
wobei aus mehreren Komponenten einschließlich der elastischen Elemente Einweg-Hygieneprodukte gebildet und gemeinsam verpackt werden.

13. Verfahren nach Anspruch 12, wobei Einweg-Hygiene-Produkte in Form von Windeln in einem Kunststoffbeutel verpackt werden und wobei der Kunststoffbeutel nachfolgend verschlossen wird.

## Claims

1. A method for producing an elastic film for disposable hygiene products by means of an extruder, comprising the method steps of:
feeding into the extruder a thermoplastic material having elastic properties, wherein the thermoplastic material which is a styrene block copolymer, contains at least one of the following substances: styrene butadiene styrene copolymer (SBS), styrene isoprene styrene copolymer (SIS), styrene ethane propene copolymer (SEEPS) and styrene ethane buthene styrene copolymer (SEBS).
conveying and plasticising the plastic in the extruder with melt pressure building up;
injecting an entrainer as liquid into the extruder, wherein the entrainer being injected is carbon dioxide, nitrogen, noble gases in a supercritical state, methane or water.
mixing the entrainer with the plasticised pressurised plastic;
degassing the plastic mixed with the entrainer by lowering the pressure in a degassing zone of the extruder;
renewed compressing of the plastic for generating an extruder pressure;
extruding the elastic film at an extrusion nozzle of the extruder.

2. The method according to claim 1, wherein the thermoplastic material contains styrene block copolymer in an amount of at least 50% by weight.

3. The method according to claim 1 or 2, wherein the elastic film is extruded as a mono film with a thickness between 30 µm and 130 µm.

4. The method according to one of claims 1 to 3, wherein an odour absorber is added to the plastic having the elastic properties or to a polymer material for forming an additional layer of the elastic film.

5. The method according to claim 4, wherein the odour absorber provided is a substance selected from the group of zeolites, cyclodextrins, polyethylene imine and layer silicates.

6. The method according to claim 5, wherein the odour absorber added are zeolites together with water.

7. The method according to claim 5 or 6, wherein zeolites are added to the plastic in the extruder after degassing.

8. The method according to one of claims 1 to 7, wherein the elastic film, after extrusion, is brought into contact with an odour absorber on at least one outer surface.

9. The method according to claim 8, wherein the elastic film is treated with a powder containing the odour absorber.

10. The method according to claim 8, wherein the elastic film is passed through a bath, which contains the odour absorber.

11. The method according to one of claims 1 to 10, wherein the thermoplastic material fed into the extruder is in the form of different raw materials which are mixed together, wherein following degassing and renewed compressing the compound formed by mixing the raw materials is extruded and at the same time granulated, and wherein the compound formed in this way is fed to a further extruder for extruding the elastic film.

12. A method for producing a closed container with a plurality of disposable hygiene products, each of which comprises at least one elastic element with an elastic film,
wherein in order to form an elastic film, a thermoplastic material having elastic properties is fed into an extruder, the plastic subsequently being conveyed and plasticised in the extruder with melt pressure building up,
wherein the thermoplastic material which is a styrene block copolymer, contains at least one of the following substances: styrene butadiene styrene copolymer (SBS), styrene isoprene styrene copolymer (SIS), styrene ethane propene copolymer (SEEPS) and styrene ethane buthene styrene copolymer (SEBS),
wherein an entrainer is injected as liquid into the extruder and mixed with the plasticised pressurised plastic,
wherein the entrainer being injected is carbon dioxide, nitrogen, inert gases in a supercritical state, methane or water,
wherein the plastic mixed with the entrainer is degassed by lowering the pressure in a degassing zone of the extruder,
wherein disposable hygiene products are produced from a number of components including the elastic elements and packed in common.

13. The method according to claim 12, wherein disposable hygiene products in the form of nappies are packed into a plastic bag, and wherein the plastic bag is subsequently closed.

## Revendications

1. Procédé de fabrication d'un film élastique pour des produits d'hygiène jetables avec une extrudeuse, comprenant les étapes de procédé suivantes :
alimentation de l'extrudeuse avec un plastique thermoplastique présentant des propriétés élastiques, dans lequel le plastique thermoplastique contient en tant que copolymère bloc styrène au moins une des substances styrène-butadiène-styrène-copolymère (SBS), styrène-isoprène-styrène-copolymère (SIS), styrène-éthylène-éthylène-propylène-copolymère (SEEPS) et styrène-éthylène-buthylène-styrène-copolymère (SEBS) ;
transport et plastification du plastique dans l'extrudeuse sous formation d'une pression de fusion ;
injection d'un agent entraîneur en tant que fluide dans l'extrudeuse, dans lequel du dioxyde de carbone, de l'azote, des gaz rares dans un état supercritique, du méthanol ou de l'eau est injecté(e) en tant qu'agent entraîneur ;
mélange de l'agent entraîneur avec le plastique plastifié étant sous pression ;
dégazage du plastique mélangé à l'agent entraîneur par une baisse de la pression dans une zone de dégazage de l'extrudeuse ;
de nouveau compression du plastique pour produire une pression d'extrudeuse ;
extrusion du film élastique sur une buse d'extrusion de l'extrudeuse.

2. Procédé selon la revendication 1, dans lequel le plastique thermoplastique contient au moins 50 % en poids de copolymère bloc styrène.

3. Procédé selon la revendication 1 ou 2, dans lequel le film plastique est extrudé en tant que mono-film avec une épaisseur entre 30 µm et 130 µm.

4. Procédé selon l'une des revendications 1 à 3, dans lequel un absorbeur d'odeurs est ajouté au plastique présentant des propriétés élastiques ou à un matériau polymère pour la formation d'une couche supplémentaire du film élastique.

5. Procédé selon la revendication 1, dans lequel au moins une substance sélectionnée parmi le groupe de la zéolithe, la cyclodextrine, la polyéthylènimine et les silicates en couche est prévue en tant qu'absorbeur d'odeurs.

6. Procédé selon la revendication 5, dans lequel de la zéolithe est ajoutée conjointement avec de l'eau en tant qu'absorbeur d'odeurs.

7. Procédé selon la revendication 5 ou 6, dans lequel de la zéolithe est ajoutée au plastique dans l'extrudeuse après le dégazage.

8. Procédé selon l'une des revendications 1 à 7, dans lequel le film élastique est amené en contact avec un absorbeur d'odeurs sur au moins une face extérieure après l'extrusion.

9. Procédé selon la revendication 8, dans lequel le film élastique est doté d'une poudre contenant l'absorbeur d'odeurs.

10. Procédé selon la revendication 8, dans lequel le film élastique est dirigé à travers un bain qui contient l'absorbeur d'odeurs.

11. Procédé selon l'une des revendications 1 à 10, dans lequel l'extrudeuse est alimentée avec du plastique thermoplastique sous forme de différentes matières premières qui sont mélangées entre elles, dans lequel après le dégazage et de nouveau la compression, le mélange à mouler formé par mélange des matières premières est extrudé et granulé, et dans lequel le mélange à mouler ainsi formé est amené vers une autre extrudeuse avec laquelle le film élastique est extrudé.

12. Procédé de fabrication d'un emballage fermé avec une pluralité de produits d'hygiène jetables qui présentent chacun un élément élastique avec un film élastique,
dans lequel pour former le film élastique, une extrudeuse est alimentée avec un plastique thermoplastique présentant des propriétés élastiques, et le plastique est ensuite transporté et plastifié dans l'extrudeuse sous formation d'une pression de fusion,
dans lequel le plastique thermoplastique contient en tant que copolymère bloc styrène au moins une des substances styrène-butadiène-styrène-copolymère (SBS), styrène-isoprène-styrène-copolymère (SIS), styrène-éthylène-éthylène-propylène-copolymère (SEEPS) et styrène-éthylène-buthylène-styrène-copolymère (SEBS)),
dans lequel un agent entraîneur est injecté en tant que fluide dans l'extrudeuse et est mélangé au plastique plastifié étant sous pression,
dans lequel du dioxyde de carbone, de l'azote, des gaz rares dans un état supercritique, du méthanol ou de l'eau est injecté(e) en tant qu'agent entraîneur,
dans lequel le plastique mélangé à l'agent entraîneur est dégazé par une baisse de la pression dans une zone de dégazage de l'extrudeuse,
dans lequel le plastique est comprimé pour produire une pression d'extrusion et le film élastique est extrudé sur une buse d'extrusion de l'extrudeuse,
dans lequel à partir de plusieurs composantes y compris les éléments élastiques, des produits d'hygiène jetables sont formés et emballés ensemble.

13. Procédé selon la revendication 12, dans lequel des produits d'hygiène jetables sous formes de couches-culottes sont emballés dans un sachet plastique et dans lequel le sachet plastique est ensuite fermé.
